# EUROPÄISCHE PATENTSCHRIFT

(11) **EP 1 961 545 B1**
(45) Veröffentlichungstag und Bekanntmachung des Hinweises auf die Patenterteilung: **29.03.2017**
(21) Anmeldenummer: 08101402.9
(22) Anmeldetag: 08.02.2008
(51) Int. Cl.: B29C 43/22, B29C 43/28, C09J 7/02

(54) **Verfahren zur Erzeugung von nano- und/oder mikrostrukturierten Oberflächen in einer klebenden, insbesondere selbstklebenden Schicht**
Method for generating nanostructured and/or microstructured surfaces in an adhesive, in particular self-adhesive layer
Procédé de production de surfaces nano et/ou microstructurées dans une couche collante, en particulier autoadhésive

(30) Priorität: 21.02.2007 DE 102007008889
(43) Veröffentlichungstag der Anmeldung: 27.08.2008
(73) Patentinhaber: tesa SE, 22848 Norderstedt (DE)
(72) Erfinder: Burmeister, Axel, 22527 Hamburg (DE)

(56) Entgegenhaltungen:
- WO-A-94/28079
- WO-A-03/035371
- DE-A1- 3 906 872
- DE-A1- 10 158 347
- US-A- 5 650 215

## Beschreibung

Die Erfindung betrifft ein Verfahren zur Erzeugung von nano- und/oder mikrostrukturierten Oberflächen in einer klebenden, insbesondere selbstklebenden Schicht.

Oberflächen, die Strukturen mit Größen im Bereich von 10 Nanometern bis zu 100 Mikrometern aufweisen, stellen Problemlösungen in verschiedensten Bereichen dar.

Bei optischen Bauteilen kann durch Mikrostrukturen Licht aufgespalten und in gewünschte Richtungen gelenkt werden. Mit Prismen strukturierte Folien können als Retroreflektoren, für Fahrbahnmarkierungen oder auf Verkehrszeichen eingesetzt werden.

Nichtoptische Anwendungen von mikrostrukturierten Oberflächen sind selbstreinigende Oberflächen (Lotoseffekt WO 96/04123 A1), die künstliche Haifischhaut (Verringerung des Strömungswiderstandes) und Schleifpapiere.

Neben den aus WO 96/04123 A1 bekannten Verfahren zur Herstellung von Masterstrukturen seien exemplarisch erwähnt Lithographie, Grautonlithographie, Mikrofräsen und -schneiden, Laserabtragen, Ätzen und Sandstrahlen.

Ebenso ist die folgende Replikation und Umformung von Masterstrukturen mittels Galvanik zur Herstellung eines Formwerkzeugs ein weit verbreitetes Verfahren, zum Beispiel das LIGA-Verfahren.

Diese Formwerkzeuge dienen als Ausgangspunkt für weitere Abformungen in Polymeren in großen Stückzahlen.

Für die Produktion von großen Stückzahlen gibt es somit im Wesentlichen vier Verfahren.

### 1. Spritzguss

Hierbei wird in ein Formwerkzeug, welches mit einer Mikrostruktur ausgestattet ist, ein geschmolzenes Polymer unter hohem Druck in die Form eingespritzt, so dass sich das Negativ der Form und der Struktur im Polymer ausbildet. Nach dem Erstarren der Polymerschmelze in der Spritzgussform wird diese geöffnet, und das mikrostrukturierte Polymer der Form entnommen. Dieses Verfahren wird unter anderem für die Herstellung von Audio-CDs angewendet.

Der Nachteil des Spritzgusses liegt darin, dass sich auf diese Art und Weise nur kleine Flächen erzeugen lassen.

### 2. Strahlenvernetzende Polymere

a) Ein Träger mit einem strahlenvernetzbaren Polymer wird mittels eines transparenten, strukturierten Stempels oder einer Walze geformt, anschließend mittels Strahlung durch den Stempel oder durch die Walze vernetzt. Nach der Vernetzung wird das Werkzeug wieder entfernt.
b) Ein transparenter Träger mit einem strahlenvernetzbaren Polymer wird mittels eines strukturierten Stempels oder einer Walze geformt, anschließend mittels Strahlung durch den Träger vernetzt. Nach der Vernetzung wird das Werkzeug wieder entfernt.

Exemplarisch wird dieses Verfahren für Elektronen- und UV-Strahlung in dem Tagungsband 2001 der "RadTech Europe Conference and Exhibition" in dem Beitrag von Prof. Mehnert vom 10/2001 auf den Seiten 603 bis 608 beschrieben. Nachteile der strahlenvernetzenden Polymeren sind darin zu sehen, dass die Rohstoffauswahl eingeschränkt ist, die Rohstoffe darüber hinaus teuer sind und gefüllte, farbige Polymermischungen nur mit starken Einschränkungen möglich sind.

### 3. Stempelprägen

Ein thermoplastisches Polymer wird mittels eines strukturierten Metallstempels unter hoher Temperatur und hohem Druck geprägt, nach Abformung wird das Werkstück gekühlt (unterhalb des Glasübergangspunktes), um beim Herauslösen des Stempels die replizierte Struktur nicht zu zerstören.

Anschließend kann bei Verwendung eines bahnförmigen Polymer der Vorgang direkt angrenzend wiederholt werden.

Vorteilhaft am Stempelprägen ist, dass das Verfahren gut geeignet ist, um komplexe Strukturen wie Linsen und Prismen zu replizieren, und dass gleichzeitig eine sehr hohe Abformungsqualität erreichbar ist.

Auf der anderen Seite zeigt sich, dass das Stempelprägen ein sehr zeitaufwendiger Prozess ist, hoher Verschleiß des Werkzeuges zu beobachten ist, eine sehr stark ausgeprägte Nahtstelle zwischen zwei Repliken entsteht und ein hoher maschineller Aufwand durch die notwendige Planlage der Werkzeuge betrieben werden muss.

### 4. Rotationsprägen

Ein bahnförmiges, thermoplastisches Polymer wird mittels einer strukturierten Metallwalze unter hoher Temperatur und sehr hohem Druck geprägt. Nach Abformung kann das Polymer gekühlt werden (unterhalb des Glasübergangspunktes), um beim Herauslösen des Stempels die replizierte Struktur nicht zu zerstören.

Auch hier stehen einigen Vorteilen mehrere Nachteile gegenüber.

Es werden sehr hohe Prozessgeschwindigkeiten erzielt. Weiterhin ergibt sich eine quasi nahtlose Strukturierung, die besonders gut geeignet ist für die Replikation von Beugungsgittern und/oder Hologrammen.

Allerdings ist das Verfahren der Rotationsprägung nur für mechanisch und thermisch sehr stabile Polymere (PET) geeignet. Wie beim Stempelprägen muss ein sehr hoher maschineller Aufwand durch die Anforderung von absoluter Planlage unter hohem Druck betrieben werden, was insbesondere die Skalierung auf große Arbeitsbreiten erschwert.

Schließlich ist das Rotationsprägen kaum geeignet für die Abformung komplexer Strukturen, zum Beispiel Linsen oder Prismen, oder sehr hoher Strukturen.

Zur Erzeugung von Mikrostrukturen in druckempfindlichen Klebemassen gibt es unterschiedliche Ansätze:
Nach der Familie US 5,650,215 werden im Wesentlichen zwei unterschiedliche Verfahren vorgestellt, zum einen werden die Strukturen von strukturierten Walzen in die Klebemasse abgedrückt. Der Nachteil dieses Verfahrens besteht darin, dass die Klebemasse das Werkzeug verunreinigt und/ oder beim Herauslösen deformiert. Zum zweiten wird ein strukturierter Träger mit der Selbstklebemasse ausgerüstet, dessen Struktur sich auf die Selbstklebemasse überträgt.

Nach WO 97/18276 A1 werden die Strukturen in der Klebemasse durch das Füllen mit Mikrokugeln oder -ballons erzeugt. Nachteil bei diesem Verfahren ist, dass die Form und Größe der Strukturen nicht frei wählbar ist.

Aus der DE 101 58 347 A1 ist ein Verfahren zur Erzeugung von nano- und mikrostrukturierten Polymerfolien bekannt, wobei ein Polymer in einen Spalt geführt wird, der von einer Walze und einer Vorrichtung gebildet wird, die einen Gegendruck aufbaut. Das Polymer wird durch den Spalt gepresst, so dass das Polymer nach dem Spalt folienförmig auf der Walze aufliegt.

Die Walze ist mit einem Formwerkzeug umschlungen, das mit einem Relief versehen ist, welches das Negativ der herzustellenden Oberflächenstruktur auf der Polymerfolie darstellt, so dass die walzennahe Oberfläche der Polymerfolie entsprechend dem Relief ausgeformt ist.

Die Vorrichtung ist als Rakel oder Gegendruckwalze ausgeführt.

Das hier offenbarte Verfahren ist auf die Abformung der Reliefs in Folien beschränkt.

Die DE 102 10 990 A1 beschreibt ein Verfahren zur Herstellung einer beschichteten transparenten Kunststofffolie, die eine Abbildung trägt, die beispielsweise als Sicherheitsmerkmal dient. Dies wird erreicht, indem die Dicke einer auf der Kunststofffolie aufgetragenen Schicht örtlich zur Darstellung einer Abbildung variiert.

Die Schicht kann aus einer polymerhaltigen Selbstklebemasse bestehen, so dass die beschichtete transparente Kunststofffolie auf einen Haftuntergrund aufgeklebt werden kann.

Zur Herstellung der Folie wird eine Zweiwalzen-Beschichtungseinrichtung verwendet, wobei eine Walze der beiden Walzen feststeht. Dies bedeutet, dass nur Massen mit geringen Viskositäten nach dem beschriebenen Verfahren verarbeitet werden können. Weiterhin schränkt die feststehende Walze die Breite der herzustellenden Bahn ein (auf maximal 400 mm).

Da der Träger, auf den die Klebemasse beschichtet wird, gleichzeitig durch den Walzenspalt läuft, können aufgrund der feststehenden Walze der daraus resultierende Scherkräfte nur sehr stabile Träger wie dicke Folien, Gewebe oder Vliese verarbeitet. Empfindliche Träger wie Papier reißen.

Aufgabe der Erfindung ist es, ein Verfahren zu schaffen, das es ermöglicht, Nano-und/oder Mikrostrukturen auf Oberflächen selbstklebender Schichten zu schaffen, wobei das Verfahren technisch unkompliziert sein soll. Das Verfahren soll des Weiteren die schnelle Fertigung erlauben, die Abformung hoher, komplexer Strukturen quasi nahtlos ermöglichen, einen akzeptablen Aufwand beim Skalieren der Arbeitsbreiten aufweisen und letztendlich die Verwendung auch empfindlicher Träger erlauben.

Gelöst wird diese Aufgabe durch ein Verfahren, wie es im Hauptanspruch näher gekennzeichnet ist. In den Unteransprüchen sind vorteilhafte Ausführungsformen des Verfahrens beschrieben. Weiterhin vom Erfindungsgedanken umfasst sind nach dem erfindungsgemäßen Verfahren hergestellte Produkte.

Demgemäß betrifft die Erfindung ein Verfahren zur Erzeugung von nano- und/oder mikrostrukturierten Oberflächen in einer klebenden, insbesondere selbstklebenden Schicht, wobei eine klebende, insbesondere selbstklebende Polymermischung in einen Spalt geführt wird, der von einer Reliefwalze, deren Oberfläche mit einem Relief versehen ist, das das Negativ der herzustellenden Oberflächenstruktur auf der klebenden Schicht darstellt, und einer Spaltwalze gebildet wird.

Die Reliefwalze ist von einem bahnförmigen Trägermaterial zum Teil umschlungen, das durch den Spalt geführt wird und dessen Geschwindigkeit insbesondere der Umfangsgeschwindigkeit der Reliefwalze entspricht.

Die Reliefwalze und die Spaltwalze rotieren gegenläufig. Die Umfangsgeschwindigkeit der Spaltwalze beträgt gemäß einer bevorzugten Ausführungsform der Erfindung mehr als 70% der Umfangsgeschwindigkeit der Reliefwalze. Besonders bevorzugt rotieren die Reliefwalze und die Spaltwalze mit der gleichen Umfangsgeschwindigkeit.

Die klebende, insbesondere selbstklebende Polymermischung wird dabei durch den Spalt durchgepresst, ohne dass die klebende, insbesondere selbstklebende Polymermischung mit dem Relief in Berührung kommt und so dass die walzennahe Oberfläche der Polymermischung entsprechend dem Relief ausgeformt wird, ohne dass die klebende, insbesondere selbstklebende Polymermischung mit dem Relief in Berührung kommt, die Polymermischung nach dem Spaltdurchgang schichtförmig auf dem Trägermaterial aufliegt und mit diesem weggeführt wird.

Bevorzugt werden selbstklebende Polymermischungen, das erfindungsgemäße Verfahren kann aber auch bei Polymermischungen eingesetzt werden, die klebende Eigenschaften haben. Wenn im Folgenden von selbstklebenden Polymeren oder Polymermischungen die Rede ist, erkennt der Fachmann hierin keine zwingende Einschränkung des Erfindungsgedankens, sondern er liest auch andere klebende Polymermischungen automatisch mit.

In einer vorteilhaften Ausführungsform bildet eine Aufgabewalze mit der Spaltwalze einen weiteren Spalt, wobei die Aufgabewalze und die Spaltwalze bevorzugt mit der gleichen Umfangsgeschwindigkeit rotieren.

Die selbstklebende Polymermischung wird zuerst auf die Aufgabewalze aufgegeben, in den weiteren Spalt geführt und auf der Spaltwalze nach dem Spaltdurchtritt verbleibend in den Spalt zwischen der Reliefwalze und der Spaltwalze geführt.

Die Aufbringung der Polymermischung auf die Spaltwalze beziehungsweise Aufgabewalze kann bevorzugt unter Verwendung einer Düse erfolgen.

Sehr günstig im Sinne der Erfindung ist es, wenn die Walzen temperiert, insbesondere auf Temperatur oberhalb des Schmelzpunktes des verwendeten Polymeres, oder gekühlt werden.

Weiter vorzugsweise werden das Relief beziehungsweise die Nano- und/oder Mikrostruktur in der Oberfläche der Reliefwalze durch Sandstrahlen, Ätzen, Laserabtrag, lithographische Verfahren, Offsetdruck, galvanische Verfahren, LIGA und/oder Erosion erzeugt. Weiterhin vorzugsweise kann die Reliefwalze auch aus einer mit einem Formwerkzeug umschlungenen Walze bestehen.

Der Offsetdruck ist ein aus der Lithographie entwickeltes indirektes Druckverfahren, bei dem der Druck nicht unmittelbar auf das Formwerkzeug, sondern vom (seitenrichtigen) Druckträger zunächst auf einen mit einem Gummituch versehenen Zylinder erfolgt (seitenverkehrt), der seinerseits das Druckbild seitenrichtig auf das Formwerkzeug überträgt. Da der Offsetdruck ein Flachdruck-Verfahren ist, liegen druckende und nicht druckende Teile in einer Ebene. Erstere werden oleophil präpariert, so dass sie Druckfarbe aufnehmen, Wasser hingegen abstoßen. Bei den nichtdruckenden Teilen des Druckträgers ist es umgekehrt.

Unter Galvanotechnik im engeren Sinne versteht man die elektrochemische Oberflächenbehandlung von Werkstoffen, das heißt die elektrolytische Abscheidung von metallischen (seltener auch nichtmetallischen) dünnen Schichten zum Zwecke der Verschönerung, des Schutzes vor Korrosion, der Erzeugung von Verbundwerkstoffen mit verbesserten Eigenschaften und dergleichen.

Die Galvanotechnik umfasst die beiden Hauptgebiete Galvanostegie und Galvanoplastik. Die Galvanoplastik dient der Herstellung oder Reproduktion von Artikeln durch elektrolytische Abscheidung. Dazu wird von der Urform zunächst ein Abdruck (Negativ, Hohlform) aus Gips, Wachs, Guttapercha, Siliconkautschuk, niedrigschmelzenden Metall-Legierung und belichtetem und strukturiertem Photoresist usw. hergestellt. Der Abguss wird oberflächlich elektrisch leitend gemacht (durch chemische Niederschlagung oder Aufdampfung von Metallen) und dann als Minuspol in der Galvanisierflüssigkeit mit dem abzuscheidenden Metall (zum Beispiel Cu, Ni, Ag und weiteren; Pluspol) überzogen. Nach Beendigung der Elektrolyse lässt sich die gebildete Metallschicht von der Form abheben.

Das Erodieren beschreibt ein Verfahren in der Fertigungstechnik, bei dem eine gewünschte Werkstückform durch gesteuertes Herauslösen von Werkstoff-Partikeln aus der Werkstückoberfläche als Folge elektrischer Funkenüberschläge erzielt wird.

LIGA beschreibt eine Kombination von Lithographie mit Synchrotonstrahlung, Galvanoformung und Abformung, um Mikrostrukturen für elektronische Schaltkreise herzustellen. Der Vorteil des Verfahrens liegt darin, dass diese Mikrostrukturen mit Strukturhöhen von mehreren hundert Mikrometern bei kleinsten Lateralabmessungen im Nanometerbereich gefertigt werden können.

Die Strukturtiefe des in der selbstklebenden Schicht erzeugten Gegenreliefs liegt weiter vorzugsweise zwischen 1 µm und 3.000 µm und die Strukturbreite zwischen 0,5 µm und 10 cm.

Ein besonderer Vorteil des erfindungsgemäßen Verfahrens ist, dass Strukturen unterschiedlichster Dimensionen im Relief unmittelbar nebeneinander liegen können und dennoch in guter Qualität abgeformt werden.

Im Folgenden sollen beispielhaft Methoden angegeben werden, welche Strukturen mit welchen Verfahren für die Reliefwalze erzeugt werden können.
- Das Relief kann als Struktur Beugungsgitter mit Gitterkonstanten von 1600 nm bis 2100 nm bei einer Tiefe von etwa 1000 nm tragen. Die Beugungsgitter sind dabei so angeordnet, dass sie bei Bestrahlung mit Weißlicht einen Schriftzug mit unterschiedlichen Farben erzeugen. Die Strukturen werden durch eine Maskenbelichtung in einem Positivphotoresist und anschließendem Auslösen der unbelichteten Bereiche auf einem Si-Wafer erzeugt. In der Folge werden diese weiterhin mit etwa 100 nm Nickel bedampft, um sie leitfähig zu machen, und abschließend galvanisch auf eine Gesamtdicke von 50 µm mit Nickelabscheidung gebracht.
- Mittels Grautonlithographie können Prismen mit einer Kantenlänge von 10 µm und einer Höhe von 7,5 µm erzeugt werden. Das Verfahren ist im Wesentlichem mit dem oben beschriebenen identisch mit dem Unterschied, dass zur Belichtung eine Grautonmaske genutzt wird.
- Mittels eines Lasers wird eine Polyesterfolie mit einer holographischen Topographie versehen, welche sich auf der Folie immer wiederholt, so dass ein "Streudruck" resultiert.
- In einen Messingrohling werden mittels eines Diamanten so genannte V-Nuten mit einer Tiefe von 20 µm geschnitten.

Bei dem erfindungsgemäßen Verfahren liegt die zu strukturierende Polymermischung vorteilhafterweise während der Ausformung gänzlich erweicht oder in Schmelze vor und bildet im ausformenden Walzenspalt zwischen Reliefwalze und Spaltwalze eine rotierende Wulst.

Die rotierende Wulst bietet erhebliche Vorteile. Der Wulst transportiert zum einen blasenförmige Lufteinschlüsse aus dem Walzenspalt an die Wulstoberfläche und zum anderen sorgt dieser für eine gleichmäßige Benetzung des Formwerkzeug, auch wenn Strukturen unterschiedlichster Gestalt und Höhe in unmittelbarer Nachbarschaft abgeformt werden sollen.

In einer weiteren vorteilhaften Ausführungsform des Verfahrens wird die selbstklebende Schicht nach dem Spaltdurchgang vom Trägermaterial abgenommen und auf einen zweiten Träger umgedeckt. Auf diese Weise liegt die strukturierte Oberfläche der selbstklebenden Schicht auf dem zweiten Träger frei.

Diese Variante ist aufgrund der geringen Beanspruchung des Trägers hervorragend geeignet, auf empfindlichen Weichfolien oder auf zum Durchschlagen der Klebemasse neigenden offenen Geweben die nano- und/oder mikrostrukturierte selbstklebende Schicht aufzubringen.

Weiter vorzugsweise ist dabei das Trägermaterial ein in sich geschlossenes Band.

Weiterhin können das Trägermaterial beziehungsweise der zweite Träger eine Folie (zum Beispiel aus PUR, PE oder PP, PET, PA), ein Vlies, ein Gewebe, ein Schaum, eine metallisierte Folie, ein Verbundstoff, ein mehrschichtiges Laminat, eine geschäumte Folie, ein Papier sein.

Vorzugsweise eingesetzt werden eine thermoplastische Polyolefinfolie, welche unverstreckt ist und mindestens ein Polyolefin aus der Gruppe der Polyethylene (zum Beispiel HDPE, LDPE, MDPE, LLDPE, VLLDPE, Copolymere des Ethylens mit polaren Comonomeren) und der Gruppe der Polypropylene (zum Beispiel Polypropylen-Homopolymere, Polypropylen-Random-Copolymere oder Polypropylen-BlockCopolymere) enthält.

Bevorzugt werden Mischungen verschiedener geeigneter Polyolefine verwendet.

Erfindungsgemäß lassen sich als Folien hervorragend monoaxial und biaxial gereckte Folien auf Basis von Polyolefinen einsetzen, insbesondere Folien auf Basis von gerecktem Polyethylen oder gereckten Copolymeren, enthaltend Ethylen- und/oder Polypropyleneinheiten.

Beispielsweise ist auch ein metallocen-Polyethylen-Vliesstoff geeignet.

Als Trägermaterial beziehungsweise Träger können weiterhin alle bekannten textilen Träger wie Maschenwaren, Gewebe, Gewirke oder Vliese verwendet werden, wobei unter "Vlies" zumindest textile Flächengebilde gemäß EN 29092 (1988) sowie Nähwirkvliese und ähnliche Systeme zu verstehen sind.

Ebenfalls können Abstandsgewebe und -gewirke mit Kaschierung verwendet werden. Abstandsgewebe sind mattenförmige Schichtkörper mit einer Deckschicht aus einem Faser- oder Filamentvlies, einer Unterlagsschicht und zwischen diesen Schichten vorhandene einzelne oder Büschel von Haltefasern, die über die Fläche des Schichtkörpers verteilt durch die Partikelschicht hindurchgenadelt sind und die Deckschicht und die Unterlagsschicht untereinander verbinden. Die durch die Partikelschicht hindurchgenadelten Haltefasern halten die Deckschicht und die Unterlagsschicht in einem Abstand voneinander und sie sind mit der Deckschicht und der Unterlagsschicht verbunden.

Als Vliesstoffe kommen besonders verfestigte Stapelfaservliese, jedoch auch Filament-, Meltblown- sowie Spinnvliese in Frage, die meist zusätzlich zu verfestigen sind. Als mögliche Verfestigungsmethoden sind für Vliese die mechanische, die thermische sowie die chemische Verfestigung bekannt. Werden bei mechanischen Verfestigungen die Fasern meist durch Verwirbelung der Einzelfasern, durch Vermaschung von Faserbündeln oder durch Einnähen von zusätzlichen Fäden rein mechanisch zusammengehalten, so lassen sich durch thermische als auch durch chemische Verfahren adhäsive (mit Bindemittel) oder kohäsive (bindemittelfrei) Faser-Faser-Bindungen erzielen. Diese lassen sich bei geeigneter Rezeptierung und Prozessführung ausschließlich oder zumindest überwiegend auf Faserknotenpunkte beschränken, so dass unter Erhalt der lockeren, offenen Struktur im Vlies trotzdem ein stabiles, dreidimensionales Netzwerk gebildet wird.

Besonders vorteilhaft haben sich Vliese erwiesen, die insbesondere durch ein Übernähen mit separaten Fäden oder durch ein Vermaschen verfestigt sind.

Derartige verfestigte Vliese werden beispielsweise auf Nähwirkmaschinen des Typs "Malivlies" der Firma Karl Mayer, ehemals Malimo, hergestellt und sind unter anderem bei den Firmen Naue Fasertechnik und Techtex GmbH beziehbar. Ein Malivlies ist dadurch gekennzeichnet, dass ein Querfaservlies durch die Bildung von Maschen aus Fasern des Vlieses verfestigt wird.

Als Träger kann weiterhin ein Vlies vom Typ Kunitvlies oder Multiknitvlies verwendet werden. Ein Kunitvlies ist dadurch gekennzeichnet, dass es aus der Verarbeitung eines längsorientierten Faservlieses zu einem Flächengebilde hervorgeht, das auf einer Seite Maschen und auf der anderen Maschenstege oder Polfaser-Falten aufweist, aber weder Fäden noch vorgefertigte Flächengebilde besitzt. Auch ein derartiges Vlies wird beispielsweise auf Nähwirkmaschinen des Typs "Kunitvlies" der Firma Karl Mayer schon seit längerer Zeit hergestellt. Ein weiteres kennzeichnendes Merkmal dieses Vlieses besteht darin, dass es als Längsfaservlies in Längsrichtung hohe Zugkräfte aufnehmen kann. Ein Multiknitvlies ist gegenüber dem Kunitvlies dadurch gekennzeichnet, dass das Vlies durch das beidseitige Durchstechen mit Nadeln sowohl auf der Ober- als auch auf der Unterseite eine Verfestigung erfährt.

Schließlich sind auch Nähvliese als Vorprodukt geeignet, ein erfindungsgemäßes Klebeband zu bilden. Ein Nähvlies wird aus einem Vliesmaterial mit einer Vielzahl parallel zueinander verlaufender Nähte gebildet. Diese Nähte entstehen durch das Einnähen oder Nähwirken von durchgehenden textilen Fäden. Für diesen Typ Vlies sind Nähwirkmaschinen des Typs "Maliwatt" der Firma Karl Mayer, ehemals Malimo, bekannt. Sodann ist das Caliweb® hervorragend geeignet. Das Caliweb® besteht aus einem thermisch fixierten Abstandsvliesstoff Multiknit mit zwei außenliegenden Maschenschichten und einer innenliegenden Polschicht, die senkrecht zu den Maschenschichten angeordnet sind.

Weiterhin besonders vorteilhaft ist ein Stapelfaservlies, das im ersten Schritt durch mechanische Bearbeitung vorverfestigt wird oder das ein Nassvlies ist, das hydrodynamisch gelegt wurde, wobei zwischen 2 % und 50 % der Fasern des Vlieses Schmelzfasern sind, insbesondere zwischen 5% und 40 % der Fasern des Vlieses.

Ein derartiges Vlies ist dadurch gekennzeichnet, dass die Fasern nass gelegt werden oder zum Beispiel ein Stapelfaservlies durch die Bildung von Maschen aus Fasern des Vlieses oder durch Nadelung, Vernähung beziehungsweise Luft- und/oder Wasserstrahlbearbeitung vorverfestigt wird.

In einem zweiten Schritt erfolgt die Thermofixierung, wobei die Festigkeit des Vlieses durch das Auf- oder Anschmelzen der Schmelzfasern nochmals erhöht wird.

Die Verfestigung des Vliesträgers lässt sich auch ohne Bindemittel beispielsweise durch Heißprägen mit strukturierten Walzen erreichen, wobei über Druck, Temperatur, Verweilzeit und die Prägegeometrie Eigenschaften wie unter anderem Festigkeit, Dicke, Dichte, Flexibilität gesteuert werden können.

Für die erfindungsgemäße Nutzung von Vliesen ist besonders die adhäsive Verfestigung von mechanisch vorverfestigten oder nassgelegten Vliesen von Interesse, wobei diese über Zugabe von Bindemittel in fester, flüssiger, geschäumter oder pastöser Form erfolgen kann. Prinzipielle Darreichungsformen sind vielfältig möglich, zum Beispiel feste Bindemittel als Pulver zum Einrieseln, als Folie oder als Gitternetz oder in Form von Bindefasern. Flüssige Bindemittel sind gelöst in Wasser oder organischen Lösemittel oder als Dispersion applizierbar. Überwiegend werden zur adhäsiven Verfestigung Bindedispersionen gewählt: Duroplasten in Form von Phenol- oder Melaminharzdispersionen, Elastomere als Dispersionen natürlicher oder synthetischer Kautschuke oder meist Dispersionen von Thermoplasten wie Acrylate, Vinylacetate, Polyurethane, Styrol-Butadien-Systeme, PVC u.ä. sowie deren Copolymere. Im Normalfall handelt es dabei um anionische oder nicht-ionogen stabilisierte Dispersionen, in besonderen Fällen können aber auch kationische Dispersionen von Vorteil sein.

Die Art des Bindemittelauftrages kann gemäß dem Stand der Technik erfolgen und ist beispielsweise in Standardwerken der Beschichtung oder der Vliestechnik wie "Vliesstoffe" (Georg Thieme Verlag, Stuttgart, 1982) oder "Textiltechnik-Vliesstofferzeugung" (Arbeitgeberkreis Gesamttextil, Eschborn, 1996) nachzulesen.

Für mechanisch vorverfestigte Vliese, die bereits eine ausreichende Verbundfestigkeit aufweisen, bietet sich der einseitige Sprühauftrag eines Bindemittels an, um Oberflächeneigenschaften gezielt zu verändern.

Neben dem sparsamen Umgang mit dem Bindemittel wird bei derartiger Arbeitsweise auch der Energiebedarf zur Trocknung deutlich reduziert. Da keine Abquetschwalzen benötigt werden und die Dispersionen vorwiegend in dem oberen Bereich des Vliesstoffes verbleibt, kann eine unerwünschte Verhärtung und Versteifung des Vlieses weitgehend verhindert werden.

Für eine ausreichende adhäsive Verfestigung des Vliesträgers ist im allgemeinen Bindemittel in der Größenordnung von 1 % bis 50 %, insbesondere 3 % bis 20 %, bezogen auf das Gewicht des Faservlieses, zuzugeben.

Die Zugabe des Bindemittels kann bereits bei der Vliesherstellung, bei der mechanischen Vorverfestigung oder aber in einem gesonderten Prozessschritt erfolgen, wobei dieser inline oder off-line durchgeführt werden kann. Nach der Bindemittelzugabe muss temporär für das Bindemittel ein Zustand erzeugt werden, in dem dieses klebend wird und adhäsiv die Fasern verbindet - dies kann während der Trocknung zum Beispiel von Dispersionen, aber auch durch Erwärmung erreicht werden, wobei über flächige oder partielle Druckanwendung weitere Variationsmöglichkeiten gegeben sind. Die Aktivierung des Bindemittels kann in bekannten Trockenkanälen, bei geeigneter Bindemittelauswahl aber auch mittels Infrarotstrahlung, UV-Strahlung, Ultraschall, Hochfrequenzstrahlung oder dergleichen erfolgen. Für die spätere Endanwendung ist es sinnvoll, aber nicht zwingend notwendig, dass das Bindemittel nach Ende des Vlies-Herstellprozesses seine Klebrigkeit verloren hat.

Eine weitere Sonderform der adhäsiven Verfestigung besteht darin, dass die Aktivierung des Bindemittels durch Anlösen oder Anquellen erfolgt. Prinzipiell können hierbei auch die Fasern selbst oder zugemischte Spezialfasern die Funktion des Bindemittels übernehmen. Da für die meisten polymeren Fasern derartige Lösemittel jedoch aus Umweltgesichtspunkten bedenklich beziehungsweise problematisch in ihrer Handhabung sind, wird dieses Verfahren eher selten angewandt.

Maschenwaren sind textile Flächengebilde, hergestellt aus einem oder mehreren Fäden oder Fadensystemen durch Maschenbildung (Fadenschleifen), im Unterschied zu Webwaren (Geweben), bei der die Fläche durch Verkreuzen von zwei Fadensystemen (Kett- und Schussfäden) hergestellt wird und den Vliesen (Faserverbundstoffen), bei denen ein loser Faserflor durch Wärme, Nadelung, Nähen oder durch Wasserstrahlen verfestigt wird.

Maschenwaren lassen sich in Gestricke, bei denen die Fäden in Querrichtung durch das Textil laufen, und in Gewirke einteilen, bei denen die Fäden längs durch das Textil laufen. Maschenwaren sind durch ihre Maschenstruktur prinzipiell nachgiebige, anschmiegsame Textilien, weil sich die Maschen in Länge und Breite dehnen können und das Bestreben haben, in ihre Ausgangslage zurückzukehren. Sie sind bei hochwertigem Material sehr strapazierfähig.

Als Ausgangsmaterialien für den textilen Träger sind insbesondere Polyester-, Polypropylen-, Viskose- oder Baumwollfasern vorgesehen. Die vorliegende Erfindung ist aber nicht auf die genannten Materialien beschränkt, sondern es können, für den Fachmann erkenntlich ohne erfinderisch tätig werden zu müssen, eine Vielzahl weiterer Fasern zur Herstellung des Vlieses eingesetzt werden. Insbesondere finden verschleißfeste Polymere wie Polyester, Polyolefine, Polyamide oder Glas- oder Carbonfasern Verwendung.

Eine besondere Ausführungsform des Trägers besteht weiterhin darin, ein Papier oder eine Folie zu verwenden, welche antiadhäsiv ausgerüstet sind.

Beispielsweise kann ein Papierträgers mit einer Dichte von 1,1 bis 1,25 g/cm³ verwendet werden, wobei der Papierträger im Wesentlichen eine obere und eine untere Seite aufweist.

Der Papierträger ist auf der oberen und/oder auf der unteren Seite mit einer Kunststoffbeschichtung versehen, wobei zumindest auf einer der gegebenenfalls vorhandenen zwei Kunststoffbeschichtungen eine antiadhäsive Schicht aufgetragen ist.

In einer weiteren vorteilhaften Ausbildung ist der Papierträger ein hochverdichtetes Glassine-Papier, der auf der oberen und auf der unteren Seite mit einer Kunststoffbeschichtung versehen ist, wobei auf beiden Kunststoffbeschichtungen eine antiadhäsive Schicht, insbesondere eine Silikonbeschichtung, aufgetragen ist.

Darüber hinaus stellt eine hervorragende Ausbildung die Tatsache dar, dass als antiadhäsive Schichten zum Beispiel Silikon, Paraffin, Teflon oder Wachse verwendet werden. Weiterhin können silikonfreie Trennschichten, zum Beispiel "non Silicone" von der Firma Rexam, oder silikonarme Trennschichten, zum Beispiel "Lo ex" von der Firma Rexam, eingesetzt werden.

Je nach Anwendungsfall des erfindungsgemäßen Trennmaterials ist es möglich, die antiadhäsiven Schichten auf beiden Seiten des Trennmaterials gleich oder unterschiedlich trennend auszugestalten, also auch auf beiden Seiten voneinander verschiedene Trenneigenschaften einzustellen (controlled release).

Für die Bildung der selbstklebenden Schicht können als Klebemassen im Wesentlichen alle Polymere eingesetzt werden, die als Kleber geeignet sind.

Bevorzugt ist das Hauptpolymer der Polymermischung aus der Gruppe der nicht-thermoplastischen Elastomere, der thermoplastischen Elastomere oder der Thermoplasten oder stellt ein Blend der genannten Polymere dar. Weiterhin liegt vorteilhafterweise die Polymermischung bei Verarbeitungstemperatur in erweichter oder geschmolzener Form vor.

Als Klebemasse ist eine solche auf Acrylathotmelt-Basis geeignet, die einen K-Wert von mindestens 20 aufweist, insbesondere größer 30 (gemessen jeweils in 1 Gew.-%iger Lösung in Toluol, 25 °C), erhältlich durch Aufkonzentrieren einer Lösung einer solchen Masse zu einem als Hotmelt verarbeitbaren System.

Das Aufkonzentrieren kann in entsprechend ausgerüsteten Kesseln oder Extrudern stattfinden, insbesondere beim damit einhergehenden Entgasen ist ein Entgasungs-Extruder bevorzugt.

Eine derartige Klebemasse ist in der DE 43 13 008 C2 dargelegt. Diesen auf diesem Wege hergestellten Acrylatmassen wird in einem Zwischenschritt das Lösungsmittel vollständig entzogen.

Der K-Wert wird dabei insbesondere bestimmt in Analogie zu DIN 53 726.

Zusätzlich werden dabei weitere leichtflüchtige Bestanteile entfernt. Nach der Beschichtung aus der Schmelze weisen diese Massen nur noch geringe Anteile an flüchtigen Bestandteilen auf. Somit können alle im oben angeführten Patent beanspruchten Monomere/Rezepturen übernommen werden. Ein weiterer Vorteil der im Patent beschriebenen Massen ist darin zu sehen, dass diese einen hohen K-Wert und damit ein hohes Molekulargewicht aufweisen. Dem Fachmann ist bekannt, dass sich Systeme mit höheren Molekulargewichten effizienter vernetzen lassen. Damit sinkt entsprechend der Anteil an flüchtigen Bestandteilen.

Die Lösung der Masse kann 5 bis 80 Gew.-%, insbesondere 30 bis 70 Gew.-% Lösungsmittel enthalten.

Vorzugsweise werden handelsübliche Lösungsmittel eingesetzt, insbesondere niedrig siedende Kohlenwasserstoffe, Ketone, Alkohole und/oder Ester.

Weiter vorzugsweise werden Einschnecken-, Zweischnecken- oder Mehrschneckenextruder mit einer oder insbesondere zwei oder mehreren Entgasungseinheiten eingesetzt.

In der Klebemasse auf Acrylathotmelt-Basis können Benzoinderivate einpolymerisiert sein, so beispielsweise Benzoinacrylat oder Benzoinmethacrylat, Acrylsäure- oder Methacrylsäureester. Derartige Benzoinderivate sind in der EP 0 578 151 A beschrieben.

Die Klebemasse auf Acrylathotmelt-Basis kann UV-vernetzt werden. Andere Vernetzungsarten sind aber auch möglich, zum Beispiel die Elektronenstrahlenvernetzung.

In einer weiteren bevorzugten Ausführungsform werden als Selbstklebemassen Copolymerisate aus (Meth)acrylsäure und deren Estern mit 1 bis 25 C-Atomen, Malein-, Fumar- und/oder Itaconsäure und/oder deren Estern, substituierten (Meth)acrylamiden, Maleinsäureanhydrid und anderen Vinylverbindungen, wie Vinylestern, insbesondere Vinylacetat, Vinylalkoholen und/oder Vinylethern eingesetzt.

Der Restlösungsmittel-Gehalt sollte unter 1 Gew.-% betragen.

Weiterhin kann eine Klebemasse verwendet werden, die aus der Gruppe der Naturkautschuke oder der Synthesekautschuke oder aus einem beliebigen Blend aus Naturkautschuken und/oder Synthesekautschuken besteht, wobei der Naturkautschuk oder die Naturkautschuke grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) und der Polyurethane und/oder deren Blends gewählt werden können.

Weiterhin vorzugsweise können den Kautschuken zur thermoplastische Elastomere mit einem Gewichtsanteil von 10 bis 50 Gew.-% zugesetzt werden, und zwar bezogen auf den Gesamtelastomeranteil.

Stellvertretend genannt seien an dieser Stelle vor allem die besonders verträglichen Styrol-Isopren-Styrol (SIS)- und Styrol-Butadien-Styrol (SBS)-Typen.

Als klebrigmachende Harze sind ausnahmslos alle vorbekannten und in der Literatur beschriebenen Klebharze einsetzbar. Genannt seien stellvertretend die Kolophoniumharze, deren disproportionierte, hydrierte, polymerisierte, veresterte Derivate und Salze, die aliphatischen und aromatischen Kohlenwasserstoffharze, Terpenharze und Terpenphenolharze. Beliebige Kombinationen dieser und weiterer Harze können eingesetzt werden, um die Eigenschaften der resultierenden Klebmasse wunschgemäß einzustellen. Auf die Darstellung des Wissensstandes im "Handbook of Pressure Sensitive Adhesive Technology" von Donatas Satas (van Nostrand, 1989) sei ausdrücklich hingewiesen.

Als Weichmacher können alle aus der Klebebandtechnologie bekannten weichmachenden Substanzen eingesetzt werden. Dazu zählen unter anderem die paraffinischen und naphthenischen Öle, (funktionalisierte) Oligomere wie Oligobutadiene, -isoprene, flüssige Nitrilkautschuke, flüssige Terpenharze, pflanzliche und tierische Öle und Fette, Phthalate, funktionalisierte Acrylate.

Zum Zwecke der thermisch induzierten chemischen Vernetzung sind alle vorbekannten thermisch aktivierbaren chemischen Vernetzer wie beschleunigte Schwefel- oder Schwefelspendersysteme, Isocyanatsysteme, reaktive Melamin-, Formaldehyd- und (optional halogenierter) Phenol-Formaldehydharze beziehungsweise reaktive Phenolharz- oder Diisocyanatvernetzungssysteme mit den entsprechenden Aktivatoren, epoxidierte Polyester- und Acrylat-Harze sowie deren Kombinationen einsetzbar.

Die Vernetzer werden vorzugsweise aktiviert bei Temperaturen über 50 °C, insbesondere bei Temperaturen von 100 °C bis 160 °C, ganz besonders bevorzugt bei Temperaturen von 110 °C bis 140 °C.

Die thermische Anregung der Vernetzer kann auch durch IR-Strahlen oder andere hochenergetische elektromagnetische Wechselfelder erfolgen.

Bevorzugt ist die Polymermischung mit Farbstoffen wie TiO₂ oder Ruß und/oder mit Füllstoffen wie Kreide abgemischt.

Des Weiteren kann die Selbstklebemasse mit Mikroballons gefüllt sein.

Bei Mikroballons handelt es sich um elastische, thermoplastische Hohlkugeln, die eine Polymerhülle aufweisen. Diese Kugeln sind mit niedrigsiedenden Flüssigkeiten oder verflüssigtem Gas gefüllt. Als Polymere für die Hülle sind insbesondere Acrylnitril, PVDC, PVC oder Acrylate geeignet. Als niedrigsiedende Flüssigkeit kommen Kohlenwasserstoffe wie die niederen Alkane, beispielsweise Pentan, als verflüssigtes Gas Chemikalien wie Isobutan in Frage.

Durch Wärmeeinwirkung verdampft zum einen die in den Mikroballons enthaltene Flüs sigkeit, zum anderen erweicht die äußere Polymerhülle. Somit dehnen sich die Kapseln irreversibel aus und expandieren dreidimensional. Die Expansion ist beendet, wenn sich der Innen- und der Außendruck ausgleichen. So erzielt man einen geschlossenzelligen Schaum. Der Anteil der expandierten Mikroballons in der Klebemasse liegt gemäß einer bevorzugten Ausführungsform der Erfindung zwischen größer 0 Gew.-% und 20 Gew.-%, insbesondere zwischen 1,5 Gew.-% und 10 Gew.-%.

Weiter vorzugsweise weisen die Mikroballons bei 25 °C einen Durchmesser von 3 µm bis 40 µm, insbesondere 5 µm bis 20 µm, und/oder nach Temperatureinwirkung einen Durchmesser von 20 µm bis 200 µm, insbesondere 40 µm bis 100 µm, auf.

Die Reliefwalze weist eine Oberfläche mit einem Relief auf, wobei die Strukturtiefe des Reliefs geringer ist als die Dicke des bahnförmigen Trägermaterials, mit dem die Reliefwalze zum Teil umschlungen ist.

Überraschenderweise werden mit dem erfindungsgemäßen Verfahren, wie es im Hauptanspruch näher beschrieben ist, die Strukturen in der klebenden Polymermischung abgeformt, sprich von der Reliefwalze durch das Trägermaterial auf das Polymer übertragen, obwohl die Strukturtiefe sehr viel kleiner sein kann als die Dicke des Trägermaterials zwischen Reliefwalze und Polymer. Beispielsweise beträgt das Verhältnis Dicke zu Trägermaterial zu Strukturtiefe 12:1 (siehe Beispiel 1).

Im Folgenden sollen erfindungsgemäße Verfahren sowie nach dem erfindungsgemäßen Verfahren hergestellte Polymerfolien anhand von mehreren Beispielen und Figuren erläutert werden, ohne die Erfindung damit allerdings unnötig einschränken zu wollen.

Es zeigen
- Figur 1: ein erfindungsgemäßes Verfahren zur Herstellung einer nano- und/oder mikrostrukturierten selbstklebenden Schicht,
- Figur 2: eine vorteilhaft ausgestaltete Variante des erfindungsgemäßen Verfahrens,
- Figur 3: eine weitere vorteilhaft ausgestaltete Variante des erfindungsgemäßen Verfahrens,
- Figur 4: das erfindungsgemäße Verfahren nach Figur 1 mit einem endlichen bahnförmigen Trägermaterial und
- Figur 5: das erfindungsgemäße Verfahren nach Figur 1 mit einem unendlichen bahnförmigen Trägermaterial, das ein geschlossenes Band bildet.

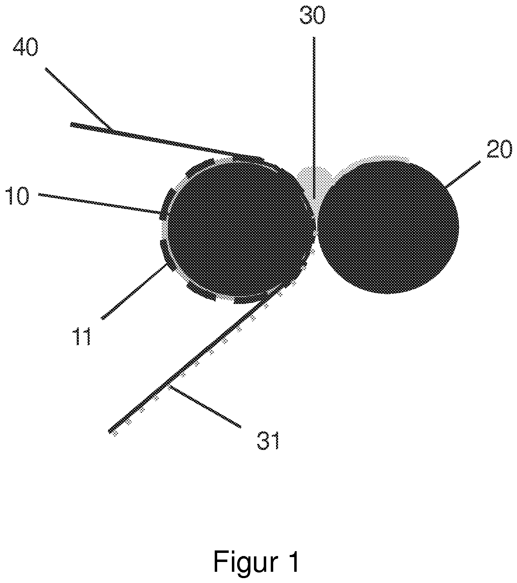

Ein erfindungsgemäßes Verfahren ist in Figur 1 gezeigt. Die Anlage besteht aus der mit dem negativen Relief 11 versehenen Reliefwalze 10 sowie der Spaltwalze 20, die gemeinsam den Walzenspalt bilden und die bevorzugt mit der gleichen Umfangsgeschwindigkeit rotieren.

Die Reliefwalze 10 ist von einem bahnförmigen Trägermaterial 40 zum Teil umschlungen. Das Trägermaterial 40 wird durch den Spalt geführt und dessen Geschwindigkeit entspricht der Umfangsgeschwindigkeit der Reliefwalze 11.

Die selbstklebende Polymermischung wird auf die Spaltwalze 20 gegeben und Richtung Spalt geführt. Der Polymerwulst 30 über dem Walzenspalt wird in den Walzenspalt gezogen und dabei in das Relief 11 der Reliefwalze gepresst, wobei zwischen Polymer und Reliefwalze 11 das Trägermaterial 40 befindet.

Nach dem Spaltdurchgang liegt das Polymer 31 schichtförmig auf dem Trägermaterial 40 auf und wird mit diesem weggeführt.

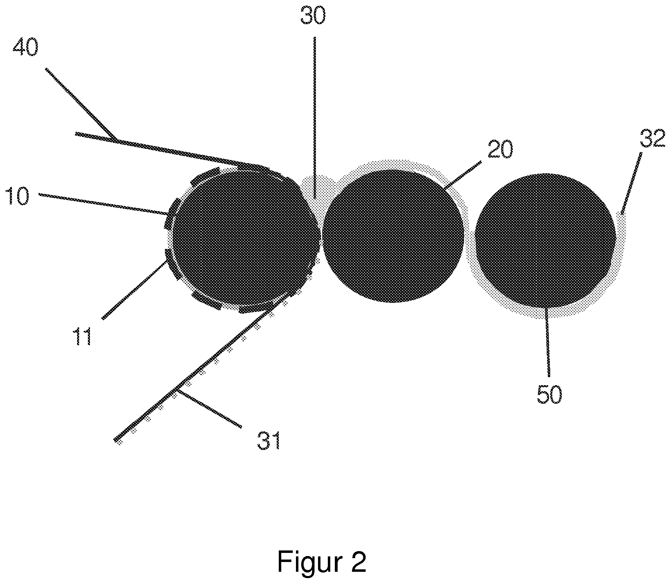

In der Figur 2 ist ein vorteilhaft gestaltetes Verfahren gezeigt. Eine Aufgabewalze 50 bildet mit der Spaltwalze 20 einen weiteren Spalt, wobei die Aufgabewalze 50 und die Spaltwalze 20 bevorzugt mit der gleichen Umfangsgeschwindigkeit rotieren.

Die selbstklebende Polymermischung 32 wird zuerst auf die Aufgabewalze 50 aufgegeben, in den weiteren Spalt geführt und auf der Spaltwalze 20 nach dem Spaltdurchtritt verbleibend in den Spalt zwischen der Reliefwalze 10 und der Spaltwalze 20.

Die weitere Verarbeitung entspricht derjenigen aus Figur 1.

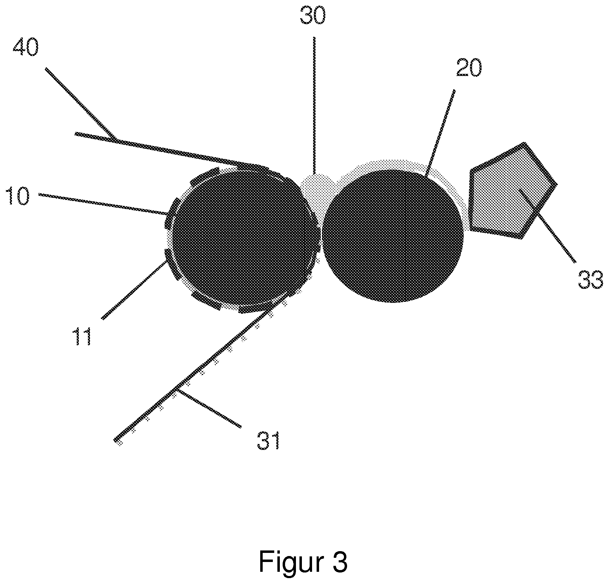

Die Figur 3 stellt ein weitere vorteilhafte Variante dar. Die selbstklebende Polymermischung wird dabei mittels einer Düse 31 auf die Spaltwalze aufgebracht.

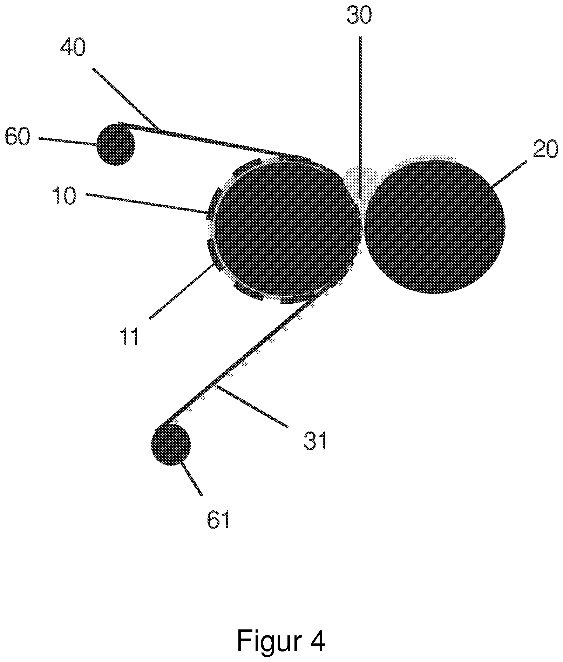

In Figur 4 ist das Verfahren nach Figur 1 mit einem endlichen bahnförmigen Trägermaterial 40 gezeigt. Das Trägermaterial 40 wird in einer Abwickelstation 60 abgewickelt, im Walzenspalt mit dem das Relief aufweisenden Polymer 31 versehen und anschließend in einer Aufwickelstation 61 aufgewickelt.

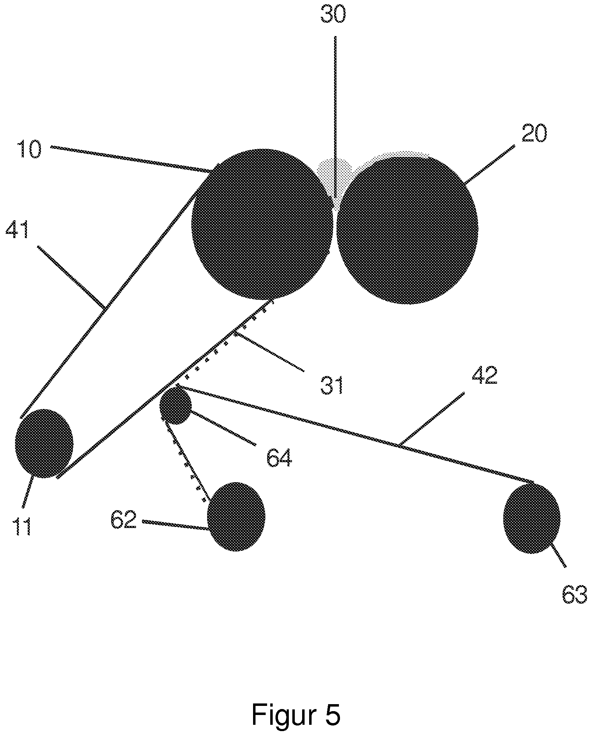

In Figur 5 ist das Verfahren nach Figur 1 mit einem unendlichen bahnförmigen Trägermaterial 41 gezeigt, das ein geschlossenes Band bildet.

Das Trägermaterial 41 wird über die Reliefwalze sowie eine Umlenkwalze 11 geführt. Nachdem das Trägermaterial 41 im Walzenspalt mit der selbstklebenden nano- und/oder mikrostrukturierten Polymermischung 31 ausgerüstet worden ist, werden das Trägermaterial 11 sowie die darauf befindliche Polymermischung 31 in Richtung einer Abzugswalze 64 geführt. Über die Abzugswalze 64 wird ein weiterer Träger 42, der von einer Abwickelstation 62 kommt, geführt. Der Träger 42 übernimmt an der Abzugswalze 64 die Selbstklebeschicht 31 vom Trägermaterial 41 und wird anschließend in einer Aufwickelstation 63 aufgewickelt.

### Beispiel 1: Acrylat

Die folgenden Monomergemische (Mengenangaben in Gew.-%) werden in Lösung copolymerisiert. Die Polymerisationsansätze bestehen aus 60 bis 80 Gew.-% der Monomergemische sowie 20 bis 40 Gew.-% Lösungsmittel wie Benzin 60/95 und Aceton.

Die Lösungen werden in üblichen Reaktionsgefäßen aus Glas oder Stahl (mit Rückflusskühler, Ankerrührer, Temperaturmesseinheit und Gaseinleitungsrohr) zunächst durch Spülen mit Stickstoff vom Sauerstoff befreit und dann zum Sieden erwärmt.

Durch Zusatz von 0,1 bis 0,4 Gew.-% eines für die radikalische Polymerisation üblichen Peroxid- oder Azo-Initiators, wie zum Beispiel Dibenzoylperoxid oder Azobisisobutyronitril, wird die Polymerisation ausgelöst. Während der Polymerisationszeit von etwa 20 Stunden wird je nach Viskositätsanstieg gegebenenfalls mehrmals mit weiterem Lösungsmittel verdünnt, so dass die fertigen Polymerlösungen einen Feststoffgehalt zwischen 25 bis 65 Gew.-% aufweisen.

Es wird eine Masse der Monomerzusammensetzung der folgenden Zusammensetzung hergestellt:

| | Gew.-% |
|---|---|
| 2-Ethylhexylacrylat | 21 |
| n-Butylacrylat | 21 |
| tert. Butylacrylat | 50 |
| Acrylsäure | 8 |

Die so hergestellte Masse wird nach Entfernung des Lösungsmittels, wie es in der EP 0 621 326 A1 beschrieben ist, in einen Walzenspalt gegeben, welcher aus einer Reliefwalze, die mit einer 12 µm dünnen, schwarzen PET-Folie zum Teil umschlungen ist, und einer Spaltwalze gebildet wird. Bei der Reliefwalze handelt es sich um eine auf 70 °C temperierte Stahlwalze, die mit einem nach dem LIGA- Verfahren gewonnenen Blech umschlungen ist, welches so geformt ist, dass eine Struktur entsteht, welche ein Beugungsgitter beziehungsweise eine holographische Abbildung enthält. Das Beugungsgitter weist eine Strukturtiefe von etwa einem µm und Gitterkonstanten zwischen 1600 und 2100 nm auf. Die selbstklebende Polymermischung wird auf die Spaltwalze gegeben und Richtung Spalt geführt. Der Polymerwulst über dem Walzenspalt wird in den Walzenspalt gezogen und dabei in das Relief der Reliefwalze gepresst, wobei sich zwischen selbstklebenden Polymer und Reliefwalze die 12 µm PET-Folie befindet. Beide Walzen werden mit einer Umfangsgeschwindigkeit von 1 m/min betrieben.

Nach dem Spaltdurchgang liegt die selbstklebende Polymermischung schichtförmig auf dem Trägermaterial auf und wird mit diesem weggeführt.

Das so erzeugte Selbstklebeband trägt in der Klebemasseschicht ein Negativ des Beugungsgitters der Reliefwalze. Es ist unter geeignetem Winkel und bei ausreichender Beleuchtung mit dem bloßen Auge sichtbar.

### Beispiel 2: Naturkautschuk

Es wird ein Planetwalzenextruder der Firma ENTEX Rust&Mitschke zur Herstellung der Polymermischung verwendet. Der Durchmesser der Walzenzylinder beträgt 70 mm, seine Verfahrenslänge ist 3 mal 400 mm.

Es werden die nicht-thermoplastischen Elastomeren in Granulatform mit mittleren Teilchengrößen von 8 mm verwendet. Um das Granulat dosierfähig zu halten, wird es talkumiert. Zur Granulatherstellung wird eine Schneidmühle der Firma Pallmann verwendet.

### Rezeptur:

| | Gew.-Teile |
|---|---|
| NR Air Dried Sheets | 100 |
| Zinkoxid, aktiv | 11,4 |
| Escorez ® 1202 | 43,6 |
| Dercolyte ® S115 | 20 |
| Resin 731 D ® | 50,9 |
| Ondina ® G 33 | 8 |
| Lowinox ® AH 25 | 2,5 |
| | |
| Summe | 236,4 |

| | |
|---|---|
| Klebharze | • Escorez® 1202 ist ein aliphatisches Kohlenwasserstoffharz des Herstellers EXXON |
| | • Dercolyte ® S 115 ist ein Poly-β-pinen-Harz des Herstellers DRT |
| | • Resin 731 D ® ist ein disproportioniertes Kolophonium des Herstellers Abieta |
| Weichmacher | Ondina ® G 33 ist ein paraffinisches Weißöl von der Deutschen Shell AG |
| Antioxidant | Lowinox ® AH 25 (2,5-Di-t-amylhydrochinon, CAS No. 79-74-3) von Great Lakes |

Aus sämtlichen Rezepturkomponenten wird in einem 50-kg-Pulvermischer ein Premix hergestellt, der über einen volumetrisch arbeitenden Dosier in den Füllteil des Planetwalzenextruders dosiert wird. Die Temperierkreise für die Zentralspindel und das Füllteil (TK1 und TK2) sind wassergekühlt, jedes Walzenteil wird mit 100 °C beheizt.

Die so hergestellten Masse wird in einen Walzenspalt gegeben, welcher aus einer Reliefwalze, die mit einer 50 µm beidseitig silikonisierten PET-Folie zum Teil umschlungen ist, und einer Spaltwalze (T= 100 °C, v= 1 m/min) gebildet wird. Bei der Reliefwalze handelt es sich um eine auf 120 °C temperierte Stahlwalze (v= 0,9 m/min), auf der ein Metallblech mit 20 µm tiefen und 2 mm breiten erhabenen Stegen mit einem Abstand von 2 cm versehen ist, quasi nahtlos parallel zur Beschichtungsrichtung montiert. Die Klebemasse wird auf die Spaltwalze gegeben und Richtung Spalt geführt. Der Polymerwulst über dem Walzenspalt wird in den Walzenspalt gezogen und dabei in das Relief der Reliefwalze gepresst, wobei sich zwischen Klebemasse und Reliefwalze die 50 µm PET-Folie befindet. Nach dem Spaltdurchgang liegt die selbstklebende Masse schichtförmig auf dem Trägermaterial auf und wird mit diesem weggeführt. Das so erhaltene Klebeband weist in den Bereichen der Stege klebmassefreie Zonen mit den Dimensionen der Stege der Reliefwalze auf.

## Patentansprüche

1. Verfahren zur Erzeugung von nano- und/oder mikrostrukturierten Oberflächen in einer klebenden, insbesondere selbstklebenden Schicht, wobei eine klebende, insbesondere selbstklebende Polymermischung 32 in einen Spalt geführt wird, der von einer Reliefwalze 10, deren Oberfläche mit einem Relief 11 versehen ist, das das Negativ der herzustellenden Oberflächenstruktur auf der klebenden Schicht darstellt, und einer Spaltwalze 20 gebildet wird, wobei
die Reliefwalze 10 und die Spaltwalze 20 gegenläufig rotieren,
die Reliefwalze 10 von einem bahnförmigen Trägermaterial 40, 41 zum Teil umschlungen ist, das durch den Spalt geführt wird und dessen Geschwindigkeit insbesondere der Umfangsgeschwindigkeit der Reliefwalze 10 entspricht,
die klebende, insbesondere selbstklebende Polymermischung 32 durch den Spalt durchgepresst wird, ohne dass die klebende, insbesondere selbstklebende Polymermischung 32 mit dem Relief 11 in Berührung kommt und so dass die walzennahe Oberfläche der Polymermischung 31 entsprechend dem Relief 11 ausgeformt wird, nach dem Spaltdurchgang schichtförmig auf dem Trägermaterial aufliegt und mit diesem weggeführt wird.

2. Verfahren nach Anspruch 1, **dadurch gekennzeichnet, dass**
eine Aufgabewalze 50 mit der Spaltwalze 20 einen weiteren Spalt bildet, die Aufgabewalze 50 und die Spaltwalze 20 bevorzugt mit der gleichen Umfangsgeschwindigkeit rotieren, und wobei die selbstklebende Polymermischung 32 zuerst auf die Aufgabewalze 50 aufgegeben wird, in den weiteren Spalt geführt wird und auf der Spaltwalze 20 nach dem Spaltdurchtritt verbleibend in den Spalt zwischen der Reliefviralze 10 und der Spaltwalze 20 geführt wird.

3. Verfahren nach den Ansprüchen 1 oder 2, **dadurch gekennzeichnet, dass**
die Walzen 10, 20, 50 temperiert, insbesondere auf eine Temperatur oberhalb des Schmelzpunktes der verwendeten Polymermischung 32, oder gekühlt werden.

4. Verfahren nach zumindest einem der Ansprüche 1 bis 3, **dadurch gekennzeichnet, dass** das Relief 11 durch Sandstrahlen, Ätzen, Laserabtrag, lithographische Verfahren, Offsetdruck, galvanische Verfahren, LIGA, Schneiden, Fräsen und/oder Erosion erzeugt wird oder die Reliefwalze 10 aus einer mit einem Formwerkzeug umschlungenen Walze besteht.

5. Verfahren nach zumindest einem der vorherigen Ansprüche, **dadurch gekennzeichnet, dass**
die Strukturtiefe des in der selbstklebenden Schicht 31 erzeugten Gegenreliefs zwischen 1 µm und 3.000 µm liegt und die Strukturbreite zwischen 0,5 µm und 10 cm.

6. Verfahren nach zumindest einem der vorherigen Ansprüche, **dadurch gekennzeichnet, dass**
die Umfangsgeschwindigkeit der Spaltwalze 20 mehr als 70% der Umfangsgeschwindigkeit der Reliefwalze 10 beträgt und bevorzugt die Reliefwalze 10 und die Spaltwalze 20 mit der gleichen Umfangsgeschwindigkeit rotieren.

7. Verfahren nach zumindest einem der vorherigen Ansprüche, **dadurch gekennzeichnet, dass**
die selbstklebende Schicht 31 nach dem Spaltdurchgang vom Trägermaterial 40, 41 abgenommen und auf einen zweiten Träger 42 umgedeckt wird.

8. Verfahren nach zumindest einem der vorherigen Ansprüche, **dadurch gekennzeichnet, dass**
das Trägermaterial 41 ein in sich geschlossenes Band ist.

9. Verfahren nach zumindest einem der vorherigen Ansprüche, **dadurch gekennzeichnet, dass**
das Hauptpolymer der Polymermischung 32 aus der Gruppe der nichtthermoplastischen Elastomere, der thermoplastischen Elastomere oder der Thermoplasten ist oder ein Blend der genannten Polymere darstellt und die Polymermischung 32 bei Verarbeitungstemperatur in erweichter oder geschmolzener Form vorliegt.

10. Verfahren nach zumindest einem der vorherigen Ansprüche, **dadurch gekennzeichnet, dass**
die Polymermischung 32 mit Farbstoffen wie TiO₂ oder Ruß und/oder mit Füllstoffen wie Kreide abgemischt ist.

11. Verfahren nach zumindest einem der vorherigen Ansprüche, **dadurch gekennzeichnet, dass**
die Selbstklebemasse 32 mit Mikroballons gefüllt ist.

12. Verfahren nach zumindest einem der vorherigen Ansprüche, **dadurch gekennzeichnet, dass**
das Polymer 31 nach der Strukturierung einer Vernetzung zum Beispiel durch ionisierende Strahlung unterworfen wird.

## Claims

1. Process for producing nanostructured and/or microstructured surfaces in an adhesive layer, more particularly in a self-adhesive layer, in which an adhesive polymer mixture 32, more particularly a self-adhesive polymer mixture, is guided into a nip formed by a relief roll 10, whose surface has been provided with a relief 11 which represents the negative of the surface structure to be produced on the adhesive layer, and by a nip roll 20, and where
the relief roll 10 and the nip roll 20 rotate in opposite directions,
wrapped partly around the relief roll 10 is a web-form carrier material 40, 41 which is guided through the nip and whose speed corresponds more particularly to the peripheral speed of the relief roll 10,
the adhesive polymer mixture 32, more particularly the self-adhesive polymer mixture, is pressed through the nip, without the adhesive polymer mixture 32, more particularly the self-adhesive polymer mixture, coming into contact with the relief 11 and so that the near-roll surface of the polymer mixture 31 is shaped in accordance with the relief 11, lies in layer form on the carrier material after passage through the nip, and is guided away with the carrier material.

2. Process according to Claim 1, **characterized in that**
a feed roll 50 forms a further nip with the nip roll 20; the feed roll 50 and the nip roll 20 rotate preferably with the same peripheral speed; and the self-adhesive polymer mixture 32 is first applied to the feed roll 50, guided into the further nip and, remaining on the nip roll 20 after passing through the nip, is guided into the nip between the relief roll 10 and the nip roll 20.

3. Process according to Claim 1 or 2, **characterized in that**
the rolls 10, 20, 50 are heated, more particularly to a temperature above the melting point of the polymer mixture 32 used, or cooled.

4. Process according to at least one of Claims 1 to 3, **characterized in that**
the relief 11 is produced by sandblasting, etching, laser ablation, lithographic techniques, offset printing, electroplating techniques, LIGA, cutting, milling and/or erosion, or the relief roll 10 is composed of a roll with a form tool wrapped around it.

5. Process according to at least one of the preceding claims, **characterized in that**
the structure depth of the counter-relief produced in the self-adhesive layer 31 is between 1 µm and 3000 µm and the structure width is between 0.5 µm and 10 cm.

6. Process according to at least one of the preceding claims, **characterized in that**
the peripheral speed of the nip roll 20 is more than 70% of the peripheral relief roll 10 and, preferably, the relief roll 10 and the nip roll 20 rotate with the same peripheral speed.

7. Process according to at least one of the preceding claims, **characterized in that**
after passage through the nip, the self-adhesive layer 31 is taken from the carrier material 40, 41 and transferred to a second carrier 42.

8. Process according to at least one of the preceding claims, **characterized in that**
the carrier material 41 is an inherently impervious strip.

9. Process according to at least one of the preceding claims, **characterized in that**
the principal polymer of the polymer mixture 32 is from the group of non-thermoplastic elastomers, thermoplastic elastomers or thermoplasts or represents a blend of the said polymers, and the polymer mixture 32 at processing temperature is in softened or melted form.

10. Process according to at least one of the preceding claims, **characterized in that**
the polymer mixture 32 has been blended with colorants such as TiO₂ or carbon black and/or with fillers such as chalk.

11. Process according to at least one of the preceding claims, **characterized in that**
the self-adhesive composition 32 is filled with microballoons.

12. Process according to at least one of the preceding claims, **characterized in that**,
after structuring, the polymer 31 is subjected to crosslinking by means, for example, of ionizing radiation.

## Revendications

1. Procédé destiné à la génération de surfaces nanostructurées et/ou microstructurées dans une couche adhésive, en particulier autoadhésive, dans lequel un mélange de polymères (32) adhésif, en particulier autoadhésif, est guidé dans une fente, laquelle est formée par un rouleau à surface en relief (10), dont la surface est dotée d'un relief (11) qui représente le négatif de la structure de la surface à reproduire sur la couche adhésive, ainsi que par un rouleau à interstices (20),
dans lequel le rouleau à surface en relief (10) et le rouleau à interstices (20) tournent dans des directions opposées ;
le rouleau à surface en relief (10) est en partie entouré par un matériau de support (40, 41) en forme de bande, lequel est guidé à travers la fente et dont la vitesse correspond, en particulier, à la vitesse périphérique du rouleau à surface en relief (10) ;
le mélange de polymères (32) adhésif, en particulier autoadhésif, est comprimé à travers la fente, sans que le mélange de polymères (32) adhésif, en particulier autoadhésif, ne vienne en contact avec le relief (11), et de telle sorte que la surface du mélange de polymères (31), se trouvant à proximité du rouleau, est moulée conformément au relief (11), vient s'appliquer en forme de couche sur le matériau de support, après le passage à travers la fente, et est évacuée avec celui-ci.

2. Procédé selon la revendication 1,
**caractérisé en ce que**
un cylindre rotatif de chargement (50) forme une autre fente avec le rouleau à interstices (20), **en ce que** le cylindre rotatif de chargement (50) et le rouleau à interstices (20) tournent de préférence à la même vitesse périphérique, et dans lequel le mélange de polymères (32) autoadhésif est appliqué dans un premier temps sur le cylindre rotatif de chargement (50), est guidé dans l'autre fente, puis est guidé sur le rouleau à interstices (20) après le passage à travers la fente, en demeurant dans la fente entre le rouleau à surface en relief (10) et le rouleau à interstices (20).

3. Procédé selon la revendication 1 ou 2,
**caractérisé en ce que**
les rouleaux (10, 20, 50) sont amenés à une température en particulier à une température située au-dessus du point de fusion du mélange de polymères (32) utilisé, ou refroidis.

4. Procédé selon tout au moins l'une des revendications 1 à 3,
**caractérisé en ce que**
le relief (11) est produit par l'intermédiaire d'un processus de sablage, de gravure à l'acide, d'abrasion au laser, d'un procédé lithographique, d'une impression offset, d'un procédé galvanique, d'un procédé LIGA, d'une découpe, d'un fraisage et/ou d'une érosion ou **en ce que** le rouleau à surface en relief (10) est constitué d'un rouleau entouré d'un outil de moulage.

5. Procédé selon tout au moins l'une des revendications précédentes,
**caractérisé en ce que**
la profondeur de la structure du contre-relief produit dans la couche (31) autoadhésive est comprise entre 1 µm et 3.000 µm et la largeur de la structure est comprise entre 0,5 µm et 10 cm.

6. Procédé selon tout au moins l'une des revendications précédentes,
**caractérisé en ce que**
la vitesse périphérique du rouleau à interstices (20) s'élève à plus de 70 % de la vitesse périphérique du rouleau à surface en relief (10) et le rouleau à surface en relief (10) et le rouleau à interstices (20) tournent de préférence à la même vitesse périphérique.

7. Procédé selon tout au moins l'une des revendications précédentes,
**caractérisé en ce que**
la couche (31) autoadhésive est retirée par le matériau de support (40, 41) après le passage à travers la fente et ré-enveloppée sur un deuxième support (42).

8. Procédé selon tout au moins l'une des revendications précédentes,
**caractérisé en ce que**
le matériau de support (41) est une bande fermée en soi.

9. Procédé selon tout au moins l'une des revendications précédentes,
**caractérisé en ce que**
le polymère principal du mélange de polymères (32) est issu du groupe des élastomères non thermoplastiques, des élastomères thermoplastiques ou des thermoplastiques, ou représente un mélange des polymères cités et le mélange de polymères (32) se présente, à la température de traitement, sous une forme ramollie ou fondue.

10. Procédé selon tout au moins l'une des revendications précédentes,
**caractérisé en ce que**
le mélange de polymères (32) est mélangé à des colorants tels que du TiO₂ ou de la suie et/ou à des matières de remplissage telles que de la craie.

11. Procédé selon tout au moins l'une des revendications précédentes,
**caractérisé en ce que**
la masse autoadhésive (32) est chargée de microballons.

12. Procédé selon tout au moins l'une des revendications précédentes,
**caractérisé en ce que**
le polymère (31) est soumis, à l'issue de la structuration, à une réticulation, par exemple par l'intermédiaire d'une radiation ionisante.
